# EUROPÄISCHE PATENTANMELDUNG

(11) **EP 1 544 034 A1**
(43) Veröffentlichungstag der Anmeldung: **22.06.2005**
(21) Anmeldenummer: 04028432.5
(22) Anmeldetag: 01.12.2004
(51) Int. Cl.: B60Q 1/04, F21V 17/00

(54) **Fahrzeugscheinwerfer sowie Kraftfahrzeug und integrierte Baugruppe mit einem derartigen Fahrzeugscheinwerfer**

(30) Priorität: 20.12.2003 DE 10360184
(71) Anmelder: REHAU AG + Co, 95111 Rehau (DE)
(72) Erfinder: Lux, Stefan, 95182 Döhlau (DE); Mett, Thomas, 95182 Tauperlitz (DE)

(57) **Zusammenfassung**

Ein Fahrzeugscheinwerfer (4) hat ein Scheinwerfergehäuse (7), welches eine Lichtquelle (12) haltert und am Rahmen eines Kraftfahrzeugs festlegbar ist. Der Fahrzeugscheinwerfer (4) hat eine für Scheinwerferlicht durchlässige Scheinwerferabdeckscheibe (3), die mit dem Scheinwerfergehäuse (7) über eine Halteeinrichtung (6) verbunden ist. Letztere umfasst ein flexibles Ausgleichselement (11), so dass eine Relativbewegung der gehalterten Scheinwerferabdeckscheibe (3) zum Scheinwerfergehäuse (7) ermöglicht ist. Im Bereich einer für den Scheinwerfer (4) vorgesehenen Karosserieöffnung (2) ist die Scheinwerferabdeckscheibe (3) mit der Karosserie (1) über ein Befestigungselement (5) verbunden. Eine Ausgleichsbewegung, insbesondere ein thermischer Ausgleich, des Scheinwerfers (4) relativ zur Karosserie (1) ist bei dieser Ausgestaltung möglich, ohne dass hierunter die Stabilität des Scheinwerfers (4) leidet.

## Beschreibung

Die Erfindung betrifft einen Fahrzeugscheinwerfer nach dem Oberbegriff des Anspruchs 1. Ferner betrifft die Erfindung ein Kraftfahrzeug und eine integrierte Baugruppe mit einem derartigen Fahrzeugscheinwerfer nach Anspruch 7 und 10.

Ein derartiger Fahrzeugscheinwerfer ist bekannt aus der DE 197 27 005 C2. Dort wird zum Ausgleich der unterschiedlichen thermischen Ausdehnung des Scheinwerfers einerseits und benachbarter Karosserieelemente andererseits vorgeschlagen, den Fahrzeugscheinwerfer einerseits formschlüssig mit den Karosserieelementen zu verbinden, den Scheinwerfer andererseits aber über Federmittel an weiteren Fahrzeugbauteilen so anzubringen, dass eine Relativbewegung des Scheinwerfers zu diesen Fahrzeugbauteilen möglich ist. Eine derartige Halterung des Fahrzeugscheinwerfers führt dazu, dass sich dieser im Rahmen der thermischen Ausgleichsbewegung hinsichtlich seiner Leuchtrichtung verstellen kann. Zudem ist nicht ausgeschlossen, dass aufgrund der federnden Anbringung der Fahrzeugscheinwerfer zum Beispiel bei schlechten Straßenverhältnissen unerwünscht in Schwingung versetzt wird.

Es ist daher eine Aufgabe der vorliegenden Erfindung, einen Fahrzeugscheinwerfer der eingangs genannten Art derart weiterzubilden, dass ein Ausgleich unterschiedlicher thermischer Ausdehnungen des Scheinwerfers einerseits und der umgebenden Karosserieteile andererseits gegeben ist, wobei aber die Stabilität des Scheinwerfers, was Leuchtrichtung und Schwingungsneigung angeht, erhalten bleibt.

Diese Aufgabe ist erfindungsgemäß gelöst durch einen Fahrzeugscheinwerfer mit den Merkmalen des Kennzeichnungsteils des Anspruchs 1.

Erfindungsgemäß wurde erkannt, dass es zum Ausgleich der unterschiedlichen thermischen Ausdehnungen des Fahrzeugscheinwerfers einerseits und der umgebenden Karosserieelemente andererseits ausreicht, eine Relativbewegung der Scheinwerferabdeckscheibe zum Scheinwerfergehäuse zu ermöglichen. Die Scheinwerferabdeckscheibe kann dann insbesondere an den sie umgebenden Karosseriebauteilen festgelegt werden, so dass vorgegebene Spaltmaße im Bereich der für den Scheinwerfer vorgesehenen Karosserieöffnung eingehalten werden können. Aufgrund des flexiblen Ausgleichselements kann sich die Scheinwerferabdeckscheibe relativ zum Scheinwerfergehäuse bewegen, so dass die Möglichkeit eines thermischen Ausgleichs gegeben ist. Da das Scheinwerfergehäuse sich bei dieser Ausgleichsbewegung selbst nicht bewegen muss, sondern am Fahrzeugrahmen festgelegt ist, bleibt die Richtungsstabilität des Scheinwerfers erhalten. Auch die Gefahr einer Schwingungsneigung liegt nicht vor. Erfindungsgemäß kann auch mehr als ein Ausgleichselement vorgesehen sein. Es können z. B. zwei in Reihe zueinander angeordnete Ausgleichselemente vorliegen.

Ein Ausgleichselement nach Anspruch 2 lässt sich kompakt im für den Fahrzeugscheinwerfer vorgesehenen Bauraum unterbringen und gleichzeitig relativ kostengünstig herstellen. Als zu einem Balg alternatives Ausgleichselement kann auch ein Schlauch aus einem im Vergleich zum Scheinwerfergehäuse einerseits und zur Scheinwerferabdeckscheibe andererseits weichen und daher flexiblen Material vorgesehen sein. Das Scheinwerfergehäuse und die Schweinwerferabdeckscheibe können bei einer weiteren Variante des Ausgleichselements teleskopisch zueinander verschiebbar angeordnet sein, wobei entweder das Scheinwerfergehäuse die Scheinwerferabdeckscheibe oder die Scheinwerferabdeckscheibe das Scheinwerfergehäuse umgreift. Bei einer derartigen Teleskoplösung ist zwischen dem Scheinwerfergehäuse und der Scheinwerferabdeckscheibe insbesondere ein Dichtelement angeordnet, welches das Eindringen von Flüssigkeit in den Fahrzeugscheinwerfer verhindert.

Materialien für das Ausgleichselement nach Anspruch 3 haben sich für die an ein derartiges Ausgleichselement zu stellenden Anforderungen als besonders geeignet herausgestellt. Diese Materialien sind flexibel, dicht, wärme- und witterungsbeständig. Beispiele für geeignete thermoplastische Elastomere sind thermoplastische Olefin-Elastomere (TPEO), thermoplastische Polyurethan-Elastomere (TPEU), thermoplastische Kautschuk-Vulkanisate (TPEV).

Beispiele für geeignete synthetische Kautschuke sind Acrylnitril-Butadien-Kautschuk, NitrilKautschuk (NBR), Acrylnitril-Chloroprin-Kautschuk (NCR) sowie Terpolymere aus Ethylen, Propylen und einem Dien mit einem ungesättigten Teil des Diens in der Seitenkette (EPDM). Weitere Beispiele für Materialien, aus denen das Ausgleichselement bestehen kann, sind thermoplastische Elastomere auf Styrolbasis (TPES), thermoplastische Elastomer auf Amidbasis (TPEA), Ethylen-Vinylacetat (EVA), Ethylen-Methylacrylat (EMA), Ethylen-Octen-(EO)-Copolymer, Ethylen-Hexen-(EH-)Copolymer, Ethylen-Buten-(EBu)-Copolymer, Ethylen-Butylacrylat (EBA), Ethylen-Ethylacrylat (EEA), Fluor-Kautschuk (FKM), Polypropylen/Tetrafluorethylen-Kautschuk (FPM), Ethyl-Vinylacetat-(EVA)-Kautschuk, Low Density-Polyethylen (LDPE), Naturkautschuk, weiches Polyvenylchlorid (PVC weich). Folgende Additive können zugegeben sein: als UV-Stabilisatoren gehinderte Phenole, phenolische Amine, sterrisch gehinderte Aminverbindungen (HALS), UV-Absorber (UVA, Nickel-Quencher); als Thermostabilisatoren: Thiostabilisatoren, phenolische Antioxidantien, Phosphite, Hydoxylamine, Lactone; als Weichmacher (PVC): Dioctylphthalat (DOP), Diocthyl-Adipat sowie Polymerweichmacher auf Adipinsäurebasis. Als Beimischungen, d. h. als Füllstoffe im Bereich zwischen einem und 50 Gew.-% können dienen: Talkum, Glasfasern, Glaskugeln sowie Mineralfasern, z. B. Wollastonite.

Ein Ausgleichselement nach Anspruch 4 erfordert nur geringen zusätzlichen Herstellungsaufwand.

Ein Ausgleichselement nach Anspruch 5 kann für unterschiedliche Typen von Scheinwerfergehäusen vorgehalten werden. Umgekehrt sind für bestimmte Scheinwerfergehäuse je nach Anforderungsprofil unterschiedliche Typen von Ausgleichselementen einsetzbar.

Eine Halteeinrichtung nach Anspruch 6 gewährleistet ein einfaches Montieren der Scheinwerferabdeckscheibe am Scheinwerfergehäuse.

Eine weitere Aufgabe der Erfindung ist es, ein Kraftfahrzeug mit einem derartigen Fahrzeugscheinwerfer so weiterzubilden, dass die Einhaltung eines bestimmten Spaltmaßes zwischen Scheinwerferabdeckscheibe und Karosserie im Bereich einer für den Scheinwerfer vorgesehenen Karosserieöffnung gewährleistet ist.

Diese Aufgabe ist erfindungsgemäß gelöst durch ein Kraftfahrzeug mit den im Anspruch 7 angegebenen Merkmalen.

Die erfindungsgemäße Verbindung der Scheinwerferabdeckscheibe mit der Karosserie führt dazu, dass bei einer zum Beispiel thermisch bedingten Relativbewegung der Karosserie zum Scheinwerfergehäuse die Scheinwerferabdeckscheibe automatisch so mitgeführt wird, dass die Einbauspaltmaße erhalten bleiben.

Befestigungselemente nach den Ansprüchen 8 oder 9 haben sich für die Massenproduktion als besonders geeignet herausgestellt.

Eine weitere Aufgabe der Erfindung ist es, einen erfindungsgemäßen Fahrzeugscheinwerfer so weiterzubilden, dass der Fertigungsaufwand für ein hiermit ausgerüstetes Kraftfahrzeug bei der Endmontage verringert wird.

Diese Aufgabe ist erfindungsgemäß gelöst durch eine integrierte Baugruppe mit den im Anspruch 10 angegebenen Merkmalen.

Eine integrierte Baugruppe nach Anspruch 10 ermöglicht eine schnellere Endmontage des Kraftfahrzeugs.

Ein Ausführungsbeispiel der Erfindung wird nachfolgend anhand der Zeichnungen näher erläutert. In dieser zeigen:
- Fig. 1: eine perspektivische Ansicht eines Kotflügels eines Kraftfahrzeugs mit einem Frontscheinwerfer; und
- Fig. 2: einen horizontalen Schnitt gemäß Linie II-II in Fig. 1.

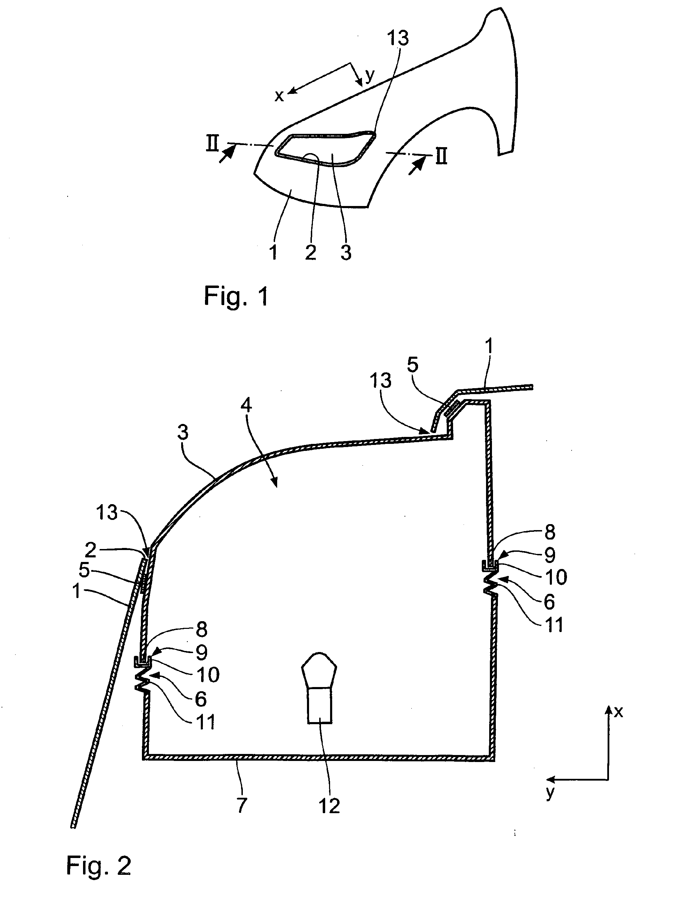

Fig. 1 zeigt perspektivisch einen Kotflügel 1 eines ansonsten nicht dargestellten Kraftfahrzeugs. Der Kotflügel 1 weist frontseitig eine Karosserieöffnung 2 auf. In diese ist eine für Scheinwerferlicht durchlässige Scheinwerferabdeckscheibe 3 eines im Schnitt der Fig. 2 schematisch näher dargestellten Fahrzeugscheinwerfers 4 eingepasst. Bei der Scheinwerferabdeckscheibe 3 handelt es sich um eine Streuscheibe. Alternativ kann, je nach Ausführung des Fahrzeugscheinwerfers, zum Beispiel auch eine Klarglasscheibe eingesetzt sein.

Die Scheinwerferabdeckscheibe 3 ist im Bereich der Karosserieöffnung 2 mit dem Kotflügel 1 über Klebstoffschichten 5 verbunden. Diese können aus einem Ein- oder einem Zwei-Komponentenkleber hergestellt sein. Die Klebstoffschichten 5 sind Beispiele eines Befestigungselements zur Verbindung der Scheinwerferabdeckscheibe 3 mit dem Kotflügel 1 als Karosserieelement. Alternativ zu den Klebstoffschichten 5 als Beispiel für eine stoffschlüssige Verbindungseinrichtung kann als derartiges Befestigungselement auch eine form- oder kraftschlüssige Verbindungseinrichtung, z. B. eine Schraub-, Niet- oder Rastverbindung vorgesehen sein.

Die Scheinwerferabdeckscheibe 3 ist über eine Halteeinrichtung 6 mit einem Scheinwerfergehäuse 7 des Fahrzeugscheinwerfers 4 verbunden. Die Halteeinrichtung 6 ist umlaufend um den dem Fahrzeuginnern zugewandten Stirnwandbereich 8 der Scheinwerferabdeckscheibe 3 angebracht. Die Halteeinrichtung 6 umfasst ein Nut-/Feder-Halteelement 9, wobei der Stirnwandbereich 8 die Feder und ein im Querschnitt U-förmiger Halteabschnitt 10 die Nut des Nut-/Feder-Halteelements 9 darstellt. Der Halteabschnitt 10 ist über einen ebenfalls umlaufend ausgeführten Balg 11 der Halteeinrichtung 6 mit dem Scheinwerfergehäuse 7 verbunden. Der Balg 11 dient hierbei als flexibles Ausgleichselement, der eine Relativbewegung der im Kotflügel 1 gehalterten Scheinwerferabdeckscheibe 3 zum Scheinwerfergehäuse 7 ermöglicht.

Das Scheinwerfergehäuse 7 ist in nicht dargestellter Weise an einem Rahmenbauteil des Kraftfahrzeugs festgelegt. Im Scheinwerfergehäuse 7 ist in nicht dargestellter Weise eine Lichtquelle 12 gehaltert.

Die Verklebung der Scheinwerferabdeckscheibe 3 am Kotflügel 1 über die Klebstoffschichten 5 ist derart, dass zwischen diesen Komponenten ein der Karosserieöffnung 2 folgender, um die Scheinwerferabdeckscheibe 3 umlaufender Spalt 13 mit gleichmäßiger Spaltweite resultiert.

Der Balg 11 ist aus einem thermoplastischen Elastomer oder einem Kautschuk.

Zum Verbinden des Scheinwerfergehäuses 7 mit dem Balg 11 kann ein Zwei-Komponenten-Spritzgießverfahren eingesetzt werden, bei dem der Balg 11 als zweite, weiche Komponente auf das Scheinwerfergehäuse 7 als erste, harte Komponente aufgespritzt wird.

Hierbei erfolgt die Herstellung und eine stoffschlüssige Verbindung des Balgs 11 mit dem Scheinwerfergehäuse 7 im Rahmen eines einzigen Verfahrensschritts.

Alternativ können das Scheinwerfergehäuse 7 und der Balg 11 getrennt voneinander hergestellt werden und anschließend miteinander, zum Beispiel durch Kleben oder Schweißen, verbunden werden.

Bei einer nicht dargestellten Variante des Fahrzeugscheinwerfers ist anstelle des Balgs 11 ein Schlauch vorgesehen, der aus einem Material gefertigt ist, welches gegenüber den Materialien, aus denen das Scheinwerfergehäuse 7 und die Schweinwerferabdeckscheibe 3 gefertigt sind, weich ist. Die Funktion des Schlauchs entspricht derjenigen des oben diskutierten Balgs 11.

Bei einer weiteren nicht dargestellten Variante eines erfindungsgemäßen Fahrzeugscheinwerfers ist anstelle des Balgs 11 eine Teleskopeinrichtung als flexibles Ausgleichselement vorgesehen. Diese Variante ist in zwei Alternativen ausführbar. Bei der ersten Alternative umgreift das Scheinwerfergehäuse 7 die Scheinwerferabdeckscheibe 3, sodass sich bei einer teleskopischen Verstellung der Teleskopeinrichtung die Scheinwerfer-Abdeckscheibe 3 z. B. in das Scheinwerfergehäuse 7 einschieben kann. Bei der zweiten Alternative umgreift die Scheinwerferabdeckscheibe 3 das Scheinwerfergehäuse 7, sodass sich letzteres bei einer teleskopischen Verstellung z. B. in die Scheinwerferabdeckscheibe einschieben kann. Bei diesen alternativen Teleskoplösungen kann zwischen dem Scheinwerfergehäuse 7 und der Scheinwerferabdeckscheibe 3 ein Dichtelement vorgesehen sein, welches das Eindringen von Flüssigkeit in den Fahrzeugscheinwerfer verhindert.

Der im Zusammenhang mit den Figuren 1 und 2 beschriebene Fahrzeugscheinwerfer kann Teil einer integrierten Baugruppe sein, welche noch folgende zusätzliche Komponenten beinhalten kann: Eine Fahrzeugrahmenverbindungseinrichtung zur Verbindung des Fahrzeugscheinwerfers 4 mit einem Fahrzeugrahmen, ein Befestigungselement zur Verbindung der Scheinwerferabdeckscheibe mit der Karosserie, z. B. die Klebstoffschichten 5, ein Karosserieelement, z. B. der Kotflügel 1, einen Energieabsorber zur Dämpfung des Zusammenpralls eines hiermit ausgerüsteten Kraftfahrzeugs mit einem weiteren Objekt, eine Scheinwerferreinigungsanlage und eine Einparkhilfevorrichtung.

## Patentansprüche

1. Fahrzeugscheinwerfer (4)
- mit einem Scheinwerfergehäuse (7), welches eine Lichtquelle (12) haltert und am Fahrzeugrahmen festlegbar ist;
- mit einer für Scheinwerferlicht durchlässigen Scheinwerferabdeckscheibe (3), die mit dem Scheinwerfergehäuse (7) über eine Halteeinrichtung (6) verbunden ist,
**dadurch gekennzeichnet,**
**dass** die Halteeinrichtung (6) ein flexibles Ausgleichselement (11) umfasst, so dass eine Relativbewegung der gehalterten Scheinwerferabdeckscheibe (3) zum Scheinwerfergehäuse (7) ermöglicht ist.

2. Fahrzeugscheinwerfer nach Anspruch 1, **dadurch gekennzeichnet, dass** das Ausgleichselement (11) als Balg ausgeführt ist.

3. Fahrzeugscheinwerfer nach Anspruch 1 oder 2, **gekennzeichnet durch** ein Ausgleichselement (11) aus einem thermoplastischen Elastomer oder einem Kautschuk.

4. Fahrzeugscheinwerfer nach einem der Ansprüche 1 bis 3, **dadurch gekennzeichnet, dass** das Ausgleichselement (11) am Scheinwerfergehäuse (7) angespritzt ist.

5. Fahrzeugscheinwerfer nach einem der Ansprüche 1 bis 3, **dadurch gekennzeichnet, dass** das Ausgleichselement (11) und das Scheinwerfergehäuse (7) getrennte Komponenten darstellen, wobei das Ausgleichselement (11) am Scheinwerfergehäuse (7) festgelegt ist.

6. Fahrzeugscheinwerfer nach einem der Ansprüche 1 bis 5, **dadurch gekennzeichnet, dass** die Halteeinrichtung (6) ein Nut-/Feder-Halteelement (9) aufweist.

7. Kraftfahrzeug mit einem Rahmen, mit einer Karosserie (1) und mit mindestens einem Fahrzeugscheinwerfer (4) nach einem der Ansprüche 1 bis 6,
wobei die Scheinwerferabdeckscheibe (3) im Bereich einer für den Scheinwerfer (4) vorgesehenen Karosserieöffnung (2) mit der Karosserie (1) über ein Befestigungselement (5) verbunden ist.

8. Kraftfahrzeug nach Anspruch 7, **gekennzeichnet durch** eine stoffschlüssige Verbindungseinrichtung, insbesondere eine Klebstoffschicht, vorzugsweise aus einem Einoder Zwei-Komponentenkleber, als Befestigungselement (5).

9. Kraftfahrzeug nach Anspruch 7, **gekennzeichnet durch** eine form- bzw. kraftschlüssige Verbindungseinrichtung, insbesondere eine Schraub-, Niet- oder Rastverbindung als Befestigungselement.

10. Integrierte Baugruppe als Teil eines Kraftfahrzeugs mit einem Fahrzeugscheinwerfer nach einem der Ansprüche 1 bis 6 und mindestens einer weiteren Komponente aus der nachfolgenden Aufzählung:
- Fahrzeugrahmenverbindungseinrichtung zur Verbindung des Fahrzeugscheinwerfers mit dem Fahrzeugrahmen,
- Befestigungselement (5) zur Verbindung der Scheinwerferabdeckscheibe (3) mit der Karosserie (1),
- Karosserieelement (1), insbesondere Kotflügel,
- Energieabsorberkomponente zur Dämpfung des Zusammenpralls eines hiermit ausgerüsteten Kraftfahrzeugs mit einem weiteren Objekt,
- Scheinwerfereinigungsanlage,
- Einparkhilfevorrichtung.
